# EUROPÄISCHE PATENTSCHRIFT

(11) **EP 1 065 472 B1**
(45) Veröffentlichungstag und Bekanntmachung des Hinweises auf die Patenterteilung: **14.05.2003**
(21) Anmeldenummer: 00112354.6
(22) Anmeldetag: 09.06.2000
(51) Int. Cl.: G01C 21/36

(54) **Informationseinrichtung als bestandteil eines Navigationssystems**
Information device as part of a navigations system
Dispositif d'information, élément d'un système de navigation

(30) Priorität: 24.06.1999 DE 19928903
(43) Veröffentlichungstag der Anmeldung: 03.01.2001
(73) Patentinhaber: Grundig Car InterMedia System GmbH, 90471 Nürnberg (DE)
(72) Erfinder: Koerber, Matthias, 90471 Nürnberg (DE); Lehmann, Reinhard, 90471 Nürnberg (DE)

(56) Entgegenhaltungen:
- EP-A- 0 908 700
- WO-A-99/67761
- DE-A- 19 521 929
- US-A- 4 733 356

## Beschreibung

Die vorliegende Erfindung betrifft eine Informationseinrichtung, insbesondere eine Informationseinrichtung als Bestandteil eines Navigationssystems für ein Fahrzeug.

Für Fahrzeuge sind Navigationssysteme entwickelt worden, die den Führer des Fahrzeugs entlasten und beim Auffinden eines gewünschten Ziels unterstützen sollen. Dazu weist das Navigationssystem einen Datenspeicher auf, der örtliche Informationen enthält, z. B. in Form digitalisierter Straßenkarten, die auf einer CD-ROM gespeichert sind. Mittels Eingabeeinrichtungen, z. B. einer Tastatur, wird das gewünschte Ziel in das Navigationssystem eingegeben. Sensoren im Fahrzeug, z. B. Geschwindigkeitssensoren und/oder Satellitensensoren (GPS-Sensoren), welche Informationen über jeweilige Position des Fahrzeugs erzeugen, werden ausgewertet und mit Hilfe der im Datenspeicher vorhandenen örtlichen Informationen wird von einem Rechner mittels vorgegebener Algorithmen eine Fahrtroute ermittelt, die zum gewünschten Ziel führt. Der Führer des Fahrzeugs wird durch akustische und/oder optische Hinweise über die ermittelte Fahrtroute zu dem gewünschten Ziel geleitet. Dies geschieht dadurch, daß jeweils kurz vor Erreichen von Abzweigepunkten Hinweise erzeugt werden, die den Führer des Fahrzeugs veranlassen, eine entsprechende Fahrtrichtungsänderung vorzunehmen.

Zur Aktualisierung der im Datenspeicher des Navigationssystems vorhandenen Informationen kann ein Mobiltelefon und/oder ein Rundfunkempfänger, z. B. ein RDS-Rundfunkempfänger (Radio-Daten-System-Rundfunkempfänger) und/oder ein DAB-Rundfunkempfänger (Digatal-Audio-Broadcast-Rundfunkempfänger) vorgesehen sein, welche den Empfang und die Auswertung digitaler Zusatzinformationen erlauben. Über Mobiltelefon oder Rundfunkempfänger können aktuelle Informationen über das Verkehrsgeschehen, z. B. über Stauungen oder Baustellen, empfangen werden und in die Ermittlung der günstigsten Fahrtroute einbezogen werden.

Aus DE-A1-195 21 929 ist eine Einrichtung zur Zielführung von Personen offenbart. Diese Einrichtung umfasst eine Navigationseinheit, die eine Empfangseinrichtung für drahtlose übermittelte Informationen zur Erkennung der aktuellen geographischen Position aufweißt. Im Weiteren ist eine Kommunikationseinheit, eine Eingabeeinheit zur Eingabe einer Zielposition und eine Ausgabeeinheit zur Ausgabe von Wegführungsinformationen vorhanden. Es ist ein Rechner zur Routenplanung vorhanden, im weiteren ist ein Speicher vorhanden, welcher mindestens eine digitalisierte Straßenkarte aufnimmt und mit der Navigationseinheit über eine Kommunikationseinheit datentechnisch verbunden ist.

Aus WO 99/67761 ist ein Navigationssystem für ein Fortbewegungsmittel bekannt. Dieses Navigationssystem weißt eine Schnittstelle zum Anschluss eines portablen Navigationsdatendarstellungsgerätes auf, über welches Navigationsdaten eines Navigationsdatenspeichers darstellbar sind. Das Navigationssystem ist in einem Fortbewegungsmittel fest installiert.

Neben der Planung von Fahrtrouten können die Navigationssysteme weitere Auskünfte zur Verfügung stellen, z. B. verfügbare Parkplätze, Hotels oder Sehenswürdigkeiten.

Die bekannten Navigationssysteme weisen jedoch den Nachteil auf, daß sie fest mit dem Fahrzeug verbunden sind, in welches sie eingebaut wurden. Deshalb stehen dem Führer des Fahrzeugs die Informationen des Navigationssystems nur innerhalb des Fahrzeugs zur Verfügung.

Es ist daher Aufgabe der vorliegenden Erfindung, eine Informationseinrichtung anzugeben, die sowohl in einem Fahrzeug für die Ermittlung einer Fahrtroute als auch außerhalb des Fahrzeugs für die Zurverfügungstellung von Informationen verwendet werden kann.

Bei einer erfindungsgemäßen Informationseinrichtung wird diese Aufgabe durch die Merkmale des Anspruchs 1 gelöst.

Die Erfindung geht dabei von der Überlegung aus, die Informationseinrichtung als Bestandteil eines Navigationssystems für ein Fahrzeug, welche für den Betrieb im Fahrzeug mittels Verbindungselementen mit der Bordelektronik, insbesondere mit dem Navigationssystem, verbunden ist, und über eine Anzeige- und Eingabeeinrichtung verfügt, auszugestalten, wobei die Informationseinrichtung eine Steuereinrichtung mit einem Speicher aufweist, mit mindestens einem nichtflüchtigen Teilbereich, wobei während des Betriebs der Informationseinrichtung im Fahrzeug die vom Navigationssystem erzeugten, vom jeweiligen Aufenthaltsort abhängigen Informationen über die Verbindungselemente an die Informationseinrichtung übertragen werden, deren Steuereinrichtung die Informationen im nichtflüchtigen Teilbereich ihres Speichers abspeichert, und wobei die Verbindungselemente lösbar sind, wodurch die Informationseinrichtung zum Betrieb außerhalb des Fahrzeugs von der Bordelektronik gelöst werden kann.

Der Vorteil der erfindungsgemäßen Informationseinrichtung liegt insbesondere darin, daß sie flexibler als bisherige Informationseinrichtungen für Navigationssysteme eingesetzt werden kann, da sie auch außerhalb des die Navigationseinrichtung aufweisenden Fahrzeugs eingesetzt werden kann. Dabei stehen in der Informationseinrichtung immer die für den jeweiligen Ort relevanten Daten und Informationen zur Verfügung, da die Daten und Informationen für die Informationseinrichtung solange aktualisiert werden, solange sich die Informationseinrichtung im Fahrzeug befindet und mit der Bordelektronik des Fahrzeugs verbunden ist.

Weitere Vorteile der vorliegenden Erfindung ergeben sich aus den abhängigen Ansprüchen sowie der nachfolgenden Beschreibung einer erfindungsgemäßen Informationseinrichtung anhand von Figuren.

Es zeigt
- Fig. 1: eine Ausführungsform einer erfindungsgemäßen Informationseinrichtung,
- Fig. 2: eine Frontal- und Seitenansicht der Informationseinrichtung aus Fig. 1,
- Fig. 3: ein Prinzipschaltbild einer ersten Ausführungsform einer erfindungsgemäßen Informationseinrichtung, und
- Fig. 4: ein Prinzipschaltbild einer zweiten Ausführungsform einer erfindungsgemäßen Informationseinrichtung.

Zur Erleichterung des Verständnisses der vorliegenden Erfindung sind in den Figuren nur die Bestandteile der Informationseinrichtung dargestellt, die im Zusammenhang mit der Erfindung von Bedeutung sind. Gleiche Bestandteile in den Figuren weisen gleiche Bezugszeichen auf.

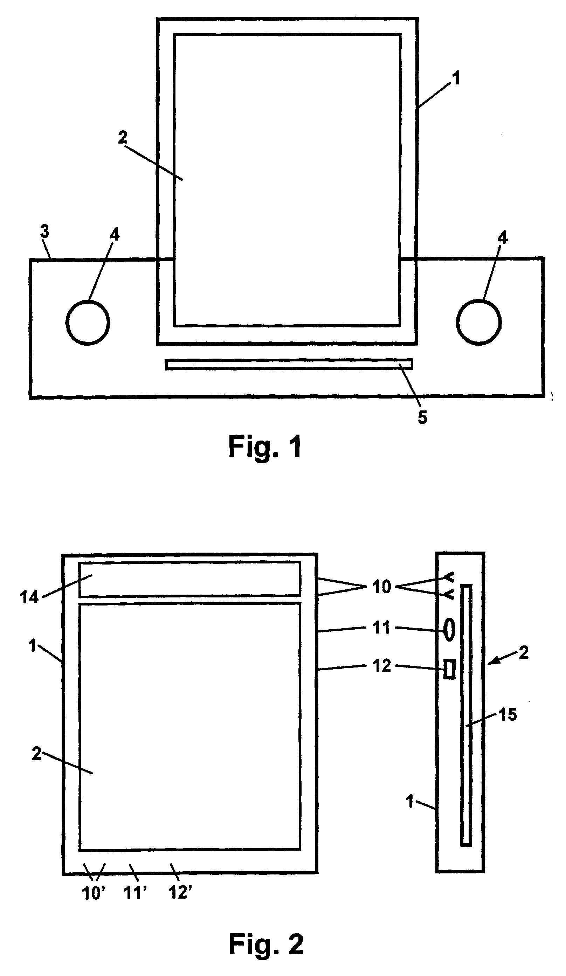

Fig.1 zeigt eine Ausführungsform einer erfindungsgemäßen Informationseinrichtung 1, mit einer Einrichtung 2 zur Anzeige und Bedienung der Informationseinrichtung 1. Die Einrichtung 2 zur Anzeige und Bedienung kann beispielsweise von einem Touch-Screen gebildet werden. Die Informationseinrichtung 1 ist Bestandteil beispielsweise eines Autoradios 3, kann aber auch ein beliebiger anderer Bestandteil der Bordelektronik eines Fahrzeugs sein, wie z. B. eines Navigationssystems oder eines Bordcomputers. Das Autoradio 3 weist außerdem weitere Bedieneinrichtungen 4, beispielsweise zur Einstellung von Lautstärke oder zur Senderauswahl, sowie einen CD-Spieler bzw. DVD-Spieler 5 auf, der zur Wiedergabe von Audio-CDs bzw. DVDs verwendet werden kann oder als Datenspeicher für ein Navigationssystem.

Die Informationseinrichtung 1 ist mit dem Autoradio 3 lösbar verbunden. Es können Führungen in Form von Nuten in Informationseinrichtung 1 und Autoradio 3 vorgesehen sein, die es erlauben, die Informationseinrichtung 1 so in das Autoradio 3 einzuschieben, daß der Touch-Screen 2 in Richtung eines Benutzers, z. B. den Führer eines Fahrzeugs, zeigt. Zusätzlich kann eine nicht dargestellte lösbare Arretierung vorgesehen werden, um die Informationseinrichtung 1 im Autoradio 3 fixieren zu können.

In Fig. 2 ist die Informationseinrichtung 1 in einer Frontal- und einer Seitenansicht dargestellt, die aus dem in Fig. 1 dargestellten Autoradio 3 entfernt ist.

Neben dem Touch-Screen 2 ist eine Antenne 14 auf der Informationseinrichtung 1 angeordnet, die zum Empfang von Signalen zur Bestimmung des Standorts dient, z. B. GPS-Signalen. In der Seitenansicht sind Kontakte 10 dargestellt, die zur Spannungsversorgung der Informationseinrichtung 1 dienen, wenn diese, wie oben beschrieben, mit dem Autoradio 3 verbunden ist. Für den Betrieb der Informationseinrichtung 1 getrennt vom Autoradio 3 ist eine nicht dargestellte Spannungsversorgung in der Informationseinrichtung 1 vorgesehen, z. B. Akkus oder Batterien.

Weiterhin ist eine Schnittstelle 11, beispielsweise eine Infrarotschnittstelle, vorgesehen, die zum Signalaustausch zwischen Informationseinrichtung 1 und Autoradio 3 dient. Die Schnittstelle 11 kann auch zum Datenaustausch mit anderen geeigneten Geräten, beispielsweise Computern, verwendet werden, wenn die Informationseinrichtung 1 nicht mit dem Autoradio 3 verbunden ist.

Zusätzlich ist ein Sensor 12 dargestellt, der die Lage der Informationseinrichtung 1 feststellt, insbesondere ob die Informationseinrichtung 1 mit dem Autoradio 3 verbunden ist. Dies ist dann von besonderer Bedeutung, wenn, wie in Fig. 2 angedeutet, weitere Kontakte 10', eine weitere Schnittstelle 11' und ein weiterer Sensor 12' vorgesehen sind, die es erlauben, die Informationseinrichtung 1 in Quer- oder Hochformat mit dem Autoradio 3 zu verbinden. Für diesen Fall müssen entsprechende Führungen sowohl in der Informationseinrichtung 1 als auch im Autoradio 3 vorhanden sein, um die Verbindungselemente 10, 11, 12 bzw. 10', 11', 12' der Informationseinrichtung 1 mit den Gegenstücken des Autoradios 3 in Verbindung bringen zu können, um die Informationseinrichtung 1 mit der Bordelektronik des Fahrzeugs zu verbinden. Mittels der Sensoren 12 bzw. 12' wird dann festgestellt, welche der Verbindungselemente 10, 11 bzw. 10', 11', abhängig von der Lage verwendet werden.

Anstelle wie beschrieben Sensoren 12 bzw. 12' zur Ermittlung der Lage der Informationseinrichtung 1 zu verwenden, kann auch ausgewertet werden, ob eine Versorgungsspannung an den Klemmen 10 bzw. 10' anliegt, oder ob Infrarotsignale an der Infrarotschnittstelle 11 bzw. 11' anliegen. Ebenso ist es möglich anstelle einer Infrarotschnittstelle eine geeignete andere Schnittstelle zu verwenden, die z. B. mittels elektrischer Kontakte oder drahtlos über Funk realisiert wird.

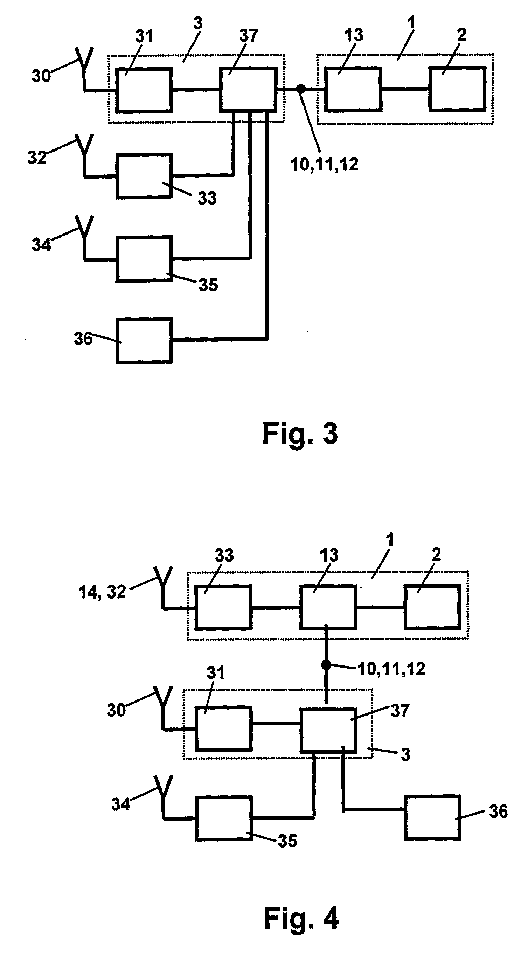

In Fig. 3 ist ein Prinzipschaltbild einer ersten Ausführungsform einer erfindungsgemäßen Informationseinrichtung 1 dargestellt. Sie weist ein Autroradio 3 mit einem Rundfunkempfänger, bestehend aus einer Antenne 30 und einem Empfangsteil 31 für den Empfang von Rundfunksignalen auf. Insbesondere enthält das Empfangsteil 31 einen nicht dargestellten Decoder, der in den empfangenen Rundfunksignalen enthaltene Verkehrsinformationen auswertet. Derartige Empfangsteile sind beispielsweise für den Empfang von RDS-Signalen oder DAB-Signalen bekannt. Die decodierten Verkehrsinformationen werden vom Empfangsteil 31 an eine Steuereinrichtung 37, beispielsweise einen Mikrocomputer, weitergegeben. An die Steuereinrichtung 37 sind darüber hinaus eine Einrichtung 32, 33 zum Empfang von Signalen zur Ortsbestimmung, eine Einrichtung 34, 35 zum Empfang von Mobilfunksignalen, z. B. nach dem GSM-Standarad, und eine Navigationseinrichtung 36 angeschlossen. Die Navigationseinrichtung 36 basiert auf der Auswertung digitalisierter Straßenkarten, die z. B. auf einer CD-ROM gespeichert sind und von einem CD-Spieler gelesen werden. Dies kann-beispielsweise der in Fig. 1 dargestellte CD-Spieler 5 sein oder ein anderer CD-Spieler, der unter einem Sitz oder im Kofferraum des das Autoradio 3 aufweisenden Fahrzeugs angebracht ist. Die Navigationseinrichtung 36 weist außerdem nicht dargestellte Geschwindigkeitssensoren auf, deren Signale von der Navigationseinrichtung 36 zur Ermittlung des jeweiligen Standorts ausgewertet werden. Zur Standortermittlung können außerdem die von der Einrichtung 32, 33 zum Empfang von Signalen zur Ortsbestimmung ermittelten Ortsangaben mitverwendet werden. Die von der Einrichtung 32, 33 empfangenen Signale können beispielsweise GPS-Signale sein.

Mittels der durch den Rundfunkempfänger 30, 31 empfangenen Verkehrsinformationen können aktuelle Verkehrssituationen wie Stauungen, Umleitungen wegen Baustellen oder Unfälle bei der Bestimmung von Fahrtrouten berücksichtigt werden. Zusätzliche Informationen wie die Belegung von Parkplätzen, Zimmerangebot in Hotels usw., die z. B. vom Rundfunkempfänger 30, 31 oder vom Mobilfunkgerät 34, 35 stammen können, können ebenfalls bei der Festlegung einer Fahrtroute berücksichtigt werden bzw. über Verbindungselemente 10, 11, 12 oder 10', 11', 12', die in Zusammenhang mit Fig. 2 oben näher beschrieben wurden, an eine Informationseinrichtung 1 übertragen werden. Die Informationseinrichtung 1 weist eine Steuereinrichtung 13, beispielsweise einen Mikrocomputer, und eine Anzeige 2 auf. Die Anzeige 2 kann als Touch-Screen ausgebildet sein und dient dann auch als Eingabeeinrichtung zur Befehlseingabe durch einen Benutzer. Die vom Autoradio 3 bzw. den oben beschriebenen Komponenten 32 bis 36 stammenden Informationen werden in einem Speicher des Mikrocomputers 13 abgespeichert. Da der Speicher des Mikrocomputers 13 oder zumindest ein Teilbereich des Speichers als nichtflüchtiger Speicher ausgestaltet ist, z. B. als Festplatte, Flash- oder EEPROM-Speicher, stehen die übertragenen Informationen in der Informationseinheit 1 auch zur Verfügung, wenn die Informationseinrichtung 1 vom Autoradio 3 an den Verbindungselementen 10, 11, 12 abgetrennt wurde.

Die Informationseinrichtung 1 kann dann beim Verlassen des Fahrzeugs mitgenommen werden und stellt die gespeicherten Informationen auch außerhalb des Fahrzeugs zur Verfügung. Dem Benutzer steht dann z. B. ein Stadtplan oder Informationen über Hotels, Restaurants, Sehenswürdigkeiten usw. zur Verfügung.

In Fig. 4 ist ein Prinzipschaltbild einer zweiten Ausführungsform einer erfindungsgemäßen Informationseinrichtung 1 dargestellt. Der Aufbau entspricht dem Aufbau der in Fig. 3 dargestellten ersten Ausführungsform, mit der Ausnahme, daß die Einrichtung 32, 33 zum Empfang von Signalen zur Ortsbestimmung (z. B. GPS-Empfänger) Bestandteil der Informationseinrichtung 1 ist. Wie in Fig. 4 angedeutet, wird während des Betriebs im Fahrzeug, d. h. in Verbindung mit dem Autoradio 3, die Fahrzeugantenne 32 verwendet, während außerhalb des Fahrzeugs die in Fig. 2 dargestellte Antenne 14 verwendet wird. Auf diese Weise ist es möglich, daß dem Benutzer jeweils zu seinem Aufenthaltsort zugehörige Informationen von der Informationseinrichtung 1 angeboten werden können, sowohl im Fahrzeug in Verbindung mit dem Autoradio 3, als auch außerhalb des Fahrzeugs.

Die Informationseinrichtung 1 kann außerdem, wie in Fig. 2 dargestellt, einen CD-Spieler 15 aufweisen. In diesem Fall kann der CD-Spieler 5 (Fig. 1) des Autoradios 3 ausschließlich zur Wiedergabe von Audiosignalen verwendet werden. Dadurch wird im Betrieb der Informationseinrichtung 1 unabhängig vom Autoradio 3 ermöglicht, daß die gesamten digitalisierten Karten zur Verfügung stehen, wodurch der Einsatzbereich der Informationseinrichtung 1 außerhalb des Fahrzeugs wesentlich vergrößert wird.

Für den Betrieb der Informationseinrichtung 1 außerhalb eines Fahrzeugs, d. h. getrennt vom Autoradio 3, kann es außerdem vorgesehen sein, daß ein Mobilfunkgerät und/oder ein Rundfunkempfänger an die Informationseinrichtung 1 angeschlossen bzw. in diese integriert sind. In diesem Fall können auch laufend aktuelle Informationen - wie oben beschrieben - erfaßt und von der Informationseinrichtung 1 verarbeitet bzw. dargestellt werden.

Anstatt wie dargestellt verschiedenen Antennen 30, 32, 34 im Fahrzeug zu verwenden, können die Antennen ganz oder teilweise in einer Antenne zusammengefaßt werden.

Zur Bedienung der Informationseinrichtung 1 innerhalb des Fahrzeugs kann es vorgesehen sein, daß eine Fembedienung am Lenkrad des Fahrzeugs angeordnet ist, mit der die Informationseinrichtung 1 anstatt mit dem Touch-Screen gesteuert werden kann. Dadurch wird der Benutzer weniger vom Verkehrsgeschehen abgelenkt. Die Fernbedienung kann z. B. mittels Infrarotsignalen mit der Informationseinrichtung 1 verbunden werden. Fernbedienung und Informationseinrichtung 1 müssen dafür entsprechende Sender bzw. Empfänger aufweisen.

In einer weiteren Ausgestaltung der Erfindung ist ein Modul zur Sparcheingabe vorgesehen, mittels welcher die Informationseinrichtung 1 per Sprache gesteuert werden kann.

Die Informationseinrichtung 1 kann als sogenannter persönlicher digitaler Assistent (PDA) ausgestaltet sein. Derartige PDAs weisen alle für den Betrieb der Informationseinrichtung 1 benötigten Bestandteile wie Touch-Screen, Mikrocomputer, Speicher und Infrarotschnittstelle auf.

Die Informationseinrichtung 1 kann aber auch ein anderes Aussehen aufweisen, insbesondere kann sie als abnehmbares Bedienteil eines Autoradios gestaltet sein. Die Informationseinrichtung 1 erstreckt sich in diesem Fall im wesentlichen über die ganze Frontfläche des Autoradios und dient zur Anzeige und Bedienung sowohl von Autoradio als auch von Informationseinrichtung 1. Wird das Bedienteil bzw. die Informationseinrichtung 1 abgenommen, ergibt sich auch ein Diebstahlsschutz für das Autoradio, das in diesem Fall nicht mehr zu gebrachen ist, da es nicht mehr bedient werden kann.

Über die Infrarotschnittstelle 11, welche auch als Funkübertragungsschnittstelle realisierbar ist, der Informationseinrichtung 1 kann auch ein Datenaustausch mit anderen datenverarbeitenden Einrichtungen wie Computern durchgeführt werden. Die Informationseinrichtung 1 kann dann dazu verwendet werden, zusätzliche Informationen an einem einen entsprechend ausgestatteten Informationsterminal zusätzlich zu den im Speicher der Steuereinrichtung 13 gespeicherten Informationen oder zu deren Aktualisierung zu laden. Ebenso ist es möglich, daß der Benutzer die zusätzlichen Informationen aus dem Speicher der Informationseinrichtung 1 mittels der Infrarotschnittstelle 11 in das Navigationssystem 36 übernimmt oder in den Speicher eines Heimcomputers überträgt.

## Patentansprüche

1. Informationseinrichtungen (1) als Bestandteil eines Navigationssystems (36), für ein Fahrzeug, welche für den Betrieb im Fahrzeug mittels Verbindungselementen (10, 11, 12;10', 11', 12') mit der Bordelektronik (30, ..., 36), insbesondere mit dem Navigationssystem (36), verbunden ist, und über eine Anzeige- und Eingabeeinrichtungen (2) verfügt, die Informationseinrichtungen (1) eine Steuereinrichtung (13) mit einem Speicher aufweist, wobei zumindest ein Teilbereich des Speichers nichtflüchtig ist, während des Betriebes der Informationseinrichtungen (1) im Fahrzeug die vom Navigationssystem (36) erzeugten, vom jeweiligen Aufenthaltsort abhängigen Informationen über die Verbindungselemente (10, 11, 12; 10', 11', 12') an die Informationseinrichtung (1) übertragen werden, deren Steuereinrichtungen (13) die Informationen im nichtflüchtigen Bereich ihres Speichers abspeichert,
**dadurch gekennzeichnet, dass**
die Verbindungselemente (10, 11, 12; 10', 11', 12') lösbar sind, wodurch die Informationseinrichtungen (1) zum Betrieb außerhalb des Fahrzeugs von der Bordelektronik gelöst werden kann, die Informationseinrichtung (1) einen ersten Empfänger (14, 33) für den Empfang von Signalen zur Ortsbestimmung, insbesondere von GPS-Signalen, aufweist und die Steuereinrichtung (13) die von einem zweiten Empfänger (32, 33) für den Empfang von Signalen zur Ortsbestimmung erzeugten Positionsangaben bei der Auswahl von ortsabhängigen Informationen aus ihrem Speicher verwendet.

2. Informationseinrichtung nach Anspruch 1,
**dadurch gekennzeichnet, dass**
die Anzeige- und Eingabeeinrichtung (2) als Touch-Screen ausgebildet ist.

3. Informationseinrichtung nach Anspruch 1 oder 2,
**dadurch gekennzeichnet, dass**
an das Navigationssystem (36) der zweite Empfänger (32, 33) für den Empfang von Signalen zur Ortsbestimmung, insbesondere von GPS Signalen, angeschlossen ist und dass das Navigationssystem (36) die vom zweitem Empfänger (32, 33) für den Empfang von Signalen zur Ortsbestimmung erzeugten Positionsangaben bei der Ermittlung von ortsabhängigen Informationen verwendet.

4. Informationseinrichtung nach einem der Ansprüche 1 bis 3,
**dadurch gekennzeichnet, dass**
an das Navigationssystem (36) ein weiterer Empfänger (30,31) für Rundfunksignale, insbesondere für Rundfunksignale wie DAB- oder RDS Signale, die Verkehrsinformationen enthalten, angeschlossen ist, und dass das Navigationssystem (36) die vom weiteren Empfänger (30, 31) für Rundfunksignale erzeugten Verkehrsinformationen bei der Ermittlung von ortsabhängigen Informationen verwendet.

5. Informationseinrichtung nach einem der Ansprüche 1 bis 4,
**dadurch gekennzeichnet, dass**
an das Navigationssystem (36) ein Mobilfunkempfänger (34, 35) angeschlossen ist, der den Empfang, von digitalen, ortsabhängigen Informationen erlaubt, und dass das Navigationssystem (36) die vom Mobilfunkempfänger (34, 35) empfangenen, ortsabhängigen Informationen bei der Ermittlung der ortsabhängigen Informationen verwendet.

6. Informationseinrichtungen nach einem der Ansprüche 1 bis 5,
**dadurch gekennzeichnet, dass**
die Informationseinrichtung (1) einen zweiten weiteren Empfänger für Rundfunksignale, insbesondere für Rundfunksignale wie DAB- oder RDS Signale, die Verkehrsinformationen enthalten, aufweist, und das die Steuereinrichtung (13) die vom Empfänger für Rundfunksignale erzeugten Verkehrsinformationen bei der Auswahl von ortsabhängigen Informationen aus ihren Speicher verwendet.

7. Informationseinrichtung nach einem der Ansprüche 1 bis 6,
**dadurch gekennzeichnet, dass**
die Informationseinrichtung (1) einen Mobilfunkempfänger aufweist, der den Empfang von digitalen, ortsabhängigen Informationen erlaubt, und daß die Steuereinrichtung (13) die vom Mobilfunkempfäger empfangenen, ortsabhängigen Informationen bei der Auswahl von ortsabhängigen Informationen aus ihrem Speicher verwendet.

8. Informationseinrichtung nach einem der Ansprüche 1 bis 7,
**dadurch gekennzeichnet, dass**
die Informationseinrichtung (1) einen Speicher (15) für digitalisierte Navigationsdaten aufweist, insbesondere einen CD-Spieler.

## Claims

1. Information devices (1) as a component of a vehicle navigation system (36) that is connected for operation in the vehicle by means of connecting elements (10, 11, 12; 10', 11', 12') to the vehicle electronics (30, ..., 36), in particular to the navigation system (36) and has a display device and input devices (2), the information devices (1) have a control device (13) having a memory, wherein at least a sub-area of the memory is nonvolatile, and during the operation of the information devices (1) in the vehicle, the information items that are generated by the navigation system (36) and that are dependent on the respective location are transmitted via connecting elements (10, 11, 12; 10', 11', 12') to the information device (1), whose control devices (13) store the information items in the nonvolatile area of its memory, **characterized in that** the connecting elements (10, 11, 12; 10', 11', 12') are detachable, as a result of which the information devices (1) can be detached from the vehicle electronics for operation outside the vehicle, the information device (1) has a first receiver (14, 33) for receiving position-determining signals, in particular GPS signals, and the control device (13) uses the positional data generated by a second receiver (32, 33) for receiving position-determining signals in selecting position-dependent information items from its memory.

2. Information device according to Claim 1, **characterized in that** the display and input device (2) is designed as a touch screen.

3. Information device according to Claim 1 or 2, **characterized in that** the second receiver (32, 33) for receiving position-determining signals, in particular GPS signals, is connected to the navigation system (36), and **in that** the navigation system (36) uses the position data generated by the second receiver (32, 33) for receiving position-determining signals in determining position-dependent information items.

4. Information device according to any of Claims 1 to 3, **characterized in that** a further receiver (30, 31) for radio signals, in particular for radio signals, such as DAB or RDS signals, that contain traffic information items, is connected to the navigation system (36), and **in that** the navigation system (36) uses the traffic information items generated by the further receiver (30, 31) for radio signals in determining position-dependent information items.

5. Information device according to any of Claims 1 to 4, **characterized in that** a mobile radio receiver (34, 35) that permits the reception of digital, position-dependent information items is connected to the navigation system (36), and **in that** the navigation system (36) uses the position-dependent information items received by the mobile radio receiver (34, 35) in determining the position-dependent information items.

6. Information devices according to any of Claims 1 to 5, **characterized in that** the information device (1) has a second, further receiver for radio signals, in particular for radio signals, such as DAB or RDS signals, that contain traffic information items, and **in that** the control device (13) uses the traffic information items generated by the receiver for radio signals in selecting position-dependent information items from its memory.

7. Information device according to any of Claims 1 to 6, **characterized in that** the information device (1) has a mobile radio receiver that permits the reception of digital, position-dependent information items, and **in that** the control device (13) uses the position-dependent information items received by the mobile radio receiver in selecting position-dependent information items from its memory.

8. Information device according to any of Claims 1 to 7, **characterized in that** the information device (1) has a memory (15) for digitized navigation data, in particular a CD player.

## Revendications

1. Dispositif d'information (1) en tant que partie d'un système de navigation (36), pour un véhicule, qui est relié pour le fonctionnement, dans le véhicule, au moyen d'éléments de liaison (10, 11, 12; 10', 11', 12') au système électronique de bord (30, ..., 36), notamment au système de navigation (36) et comporte des dispositifs d'affichage et d'introduction (2), et dans lequel le dispositif d'information (1) comporte un dispositif de commande (13) pourvu d'une mémoire, et dans lequel au moins une zone partielle de la mémoire est non volatile, et, pendant le fonctionnement du dispositif d'information (1) dans le véhicule, les informations produites par le système de navigation (36) et qui dépendent des durées respectives de séjour, sont transmises par l'intermédiaire des éléments de liaison (10, 11, 12; 10', 11', 12') au dispositif d'information (1), dont le dispositif de commande (13) mémorise des informations dans la partie non volatile de sa mémoire, **caractérisé en ce que**
les éléments de liaison (10, 11, 12; 10', 11', 12') sont amovibles, ce qui a pour effet que l'on peut détacher le dispositif d'information (1) du système électronique de bord pour le faire fonctionner à l'extérieur du véhicule, que le dispositif d'information (1) possède un premier récepteur (14, 33) pour la réception de signaux pour la détermination du lieu, notamment des signaux GPS, et le dispositif de commande (13) utilise les indications de position, produites par un second récepteur (32, 33) pour la réception de signaux pour la détermination du lieu, lors de la sélection d'informations dépendant du lieu é partir de sa mémoire.

2. Dispositif d'information selon la revendication 1, **caractérisé en ce que** le dispositif d'affichage et d'introduction (2) est agencé sous la forme d'un écran tactile.

3. Dispositif d'information selon la revendication 1 ou 2, **caractérisé en ce que** le second récepteur (32, 33) servant à recevoir des signaux pour la détermination du lieu, notamment des signaux GPS, est raccordé au système de navigation (36), et que le système de navigation (36) utilise les indications de position, qui sont produites par le second récepteur (32, 33) pour la réception de signaux pour la détermination du lieu, lors de la détermination d'informations qui dépendent du lieu.

4. Dispositif d'information selon l'une des revendications 1 à 3, **caractérisé en ce qu'**un autre récepteur (31) pour des signaux de radiodiffusion, notamment pour des signaux de radiodiffusion tels que des signaux DAB ou RDS, qui contiennent des informations de trafic, est raccordé au système de navigation (36) et que le système de navigation (36) utilise les informations de trafic, produites par l'autre récepteur (30, 31) pour des signaux de radiodiffusion, lors de la détermination d'informations qui dépendent du lieu.

5. Dispositif d'information selon l'une des revendications 1 à 4, **caractérisé en ce qu'**au système de navigation (36) est raccordé un récepteur radio mobile (34, 35), qui permet la réception d'informations numériques, qui dépendent du lieu, et que le système de navigation (36) utilise les informations dépendant du lieu, qui sont reçues par le récepteur radio mobile (34, 35), lors de la détermination des informations qui dépendent du lieu.

6. Dispositif d'information selon l'une des revendications 1 à 5, **caractérisé en ce que** le dispositif d'information (1) comporte un second autre récepteur pour les signaux de radiodiffusion, notamment pour des signaux de radiodiffusion tels que des signaux DAB ou RDS, qui contiennent des informations de trafic, et que l'unité de commande (13) utilise des informations de trafic, produites par le récepteur pour des signaux de radiodiffusion lors de la sélection d'informations qui dépendent du lieu, à partir de sa mémoire.

7. Dispositif d'information selon l'une des revendications 1 à 6, **caractérisé en ce que** le dispositif d'information (1) possède un récepteur radio mobile, qui permet la réception d'informations numériques, qui dépendent du lieu, et que le dispositif de commande (13) utilise des informations dépendant du lieu, qui sont reçues par un récepteur radio mobile, lors de la sélection d'informations qui dépendent du lieu, à partir de sa mémoire.

8. Dispositif d'information selon l'une des revendications 1 à 7, **caractérisé en ce que** le dispositif d'information (1) comporte une mémoire (15) pour des données de navigation numérisées, notamment un lecteur de disque CD.
